# EUROPÄISCHE PATENTSCHRIFT

(11) **EP 1 414 677 B1**
(45) Veröffentlichungstag und Bekanntmachung des Hinweises auf die Patenterteilung: **14.11.2007**
(21) Anmeldenummer: 02754432.9
(22) Anmeldetag: 25.07.2002
(51) Int. Cl.: B60R 21/34

(54) **VORDERBAU EINES KRAFTFAHRZEUGES MIT EINER BEI EINEM KOPFAUFPRALL SICH NACHGIEBIG VERHALTENDEN FRONTHAUBE**
FRONT STRUCTURE OF A MOTOR VEHICLE COMPRISING A FRONT BONNET THAT DEFORMS DURING A HEAD IMPACT
STRUCTURE AVANT D'AUTOMOBILE COMPRENANT UN CAPOT FRONTAL QUI SE DEFORME EN CAS DE COLLISION DE TETE

(30) Priorität: 28.07.2001 DE 10136898
(43) Veröffentlichungstag der Anmeldung: 06.05.2004
(73) Patentinhaber: ADAM OPEL AG, 65423 Rüsselsheim (DE)
(72) Erfinder: KRETH, Laszlo, 64319 Pfungstadt (DE); RENNEISEN, Ingo, 65239 Hochheim (DE); KERKELING, Christoph, 55118 Mainz (DE); VISINESCU, Radu-Mihail, 60599 Frankfurt (DE)
(74) Vertreter: Daniel, Ulrich W.P.
(86) Internationale Anmeldenummer: PCT/DE2002/002728
(87) Internationale Veröffentlichungsnummer: WO 2003/011658

(56) Entgegenhaltungen:
- WO-A-97/09203
- DE-A- 19 514 324
- DE-A- 19 625 295
- DE-A- 19 902 311
- DE-A- 19 929 048
- FR-A- 2 785 956

## Beschreibung

Die Erfindung bezieht sich auf einen Vorderbau eines Kraftfahrzeuges mit einer bei einem Kopfaufprall sich nachgiebig verhaltenen Fronthaube und mit Verformungselementen, die einer statischen Belastung einen Widerstand entgegensetzen, so dass bei einer solchen Belastung eine irreversible Eindrückung der Fronthaube verhindert wird, und die bei einer bestimmten Belastung innerhalb einer stoßartigen Krafteinwirkung nachgeben.

Ein derartiger Vorderbau ist in der gattungsgemäßen DE 199 02 311 A1 beschrieben. Insbesondere zeigt diese Schrift eine zweischalige Fronthaube mit einer Deckschale und einer darunter angeordneten Tragschale, die seitlich auf zwei Streben des Vorderbaues aufliegt. Zwischen den Schalen ist eine energieabsorbierende Zwischenschicht ausgebildet. Eine Ausführung der Zwischenschicht besteht aus einer Vielzahl von Waben mit einem runden oder elliptischen Querschnitt. Sie sind so ausgelegt, dass sie bei einer bestimmten von oben auf die Fronthaube wirkende Kraft brechen und so eine Nachgiebigkeit über einen Deformationsweg schaffen.

Da diese Zwischenschicht als energieabsorbierend bezeichnet wird, ist davon auszugehen, dass die Waben so konstruiert sind, dass sie über den gesamten Deformationsweg eine Gegenkraft erzeugen. Dementsprechend wird in dem Dokument darauf hingewiesen, dass die Fronthaube so ausgelegt sein soll, dass sich eine rechteckförmige Deformationskennung während der Deformation der Zwischenschicht ergibt.

Versuche haben allerdings gezeigt, dass eine kontinuierliche, über einen längeren Zeitraum wirkende Verzögerung im Hinblick auf die sich daraus ergebende Verletzungsschwere für einen aufschlagenden Kopf möglicherweise nicht optimal ist. Zur Bewertung der Verletzungsschwere ist der sogenannte HIC-Wert heranzuziehen, der eine Relation zwischen der Verzögerung und dem Zeitraum herstellt, in dem die Verzögerung wirkt. Der HIC-Wert ist in der Fachliteratur hinreichend genau beschrieben und definiert. Um schwere Verletzungen zu vermeiden, soll sein Wert unter 1.000 liegen. Seine Definition berücksichtigt, dass auch höhere Verzögerungen ertragbar sind, wenn sie nur kurz genug wirken.

Es wurde daher schon drauf hingewiesen, dass ein Verzögerungsverlauf, bei dem zu Beginn des Kopfaufschlages in einem kurzen Zeitabschnitt eine relativ hohe Verzögerung wirkt und danach die Verzögerung auf ein niedriges Niveau gebracht wird, im Hinblick auf das Erreichen des HIC-Schwellenwertes von 1.000 günstiger ist als eine gleichbleibende Verzögerung über einen längeren Zeitraum.

Die in dem oben genannten Dokument erwähnten Waben sollen die Eigenschaft haben, beim Zusammendrücken über den Deformationsweg eine relativ konstante Gegenkraft aufzubauen, was in Hinblick auf die eben erwähnten Überlegungen zur Verletzungsschwere durchaus nachteilig ist.

Die Erfindung beruht somit auf dem Problem, einen Vorderbau mit einer Fronthaube zu schaffen, deren Verformungselemente derart gestaltet sind, dass sie oberhalb einer bestimmten Belastung ruckartig brechen und einen im Wesentlichen kraftlosen Deformationsweg freigeben.

Das genannte Problem wird mit einem Vorderbau eines Kraftfahrzeuges gemäß dem Anspruch 1 gelöst.

Mit dem Begriff Versagensstelle soll zum Ausdruck gebracht werden, dass die Struktur der Verformungselemente, die es erlaubt, die statische Belastung auszuhalten, im Wesentlichen vom Bestehen der Versagensstellen abhängt. Wenn diese nachgeben, d.h. brechen, biegen oder in sonstiger Weise ihre Funktion verlieren, verliert auch die Struktur die Möglichkeit, eine Gegenkraft aufzubauen und bricht im Wesentlichen kraftlos zusammen. Damit dies möglich ist, müssen die einzelnen Teilstücke der Verformungselemente so angeordnet sein, dass sie nach dem Nachgeben der Versagensstelle einen Deformationsweg kraftlos durchfahren und eine neue definierte Position einnehmen. Da die Lage der einzelnen Teilstücke nach einem Nachgeben der Versagensstelle klar definiert ist, kann es nicht durch Verhakungen der freien Teilstücke zu einer unbeabsichtigten Neustruktur kommen, die dem Kopfaufschlag einen weiteren, nicht beabsichtigten Widerstand entgegensetzt.

Die Verformungselemente können, wie dies auch schon in dem oben genannten Dokument angegeben ist, zwischen einer äußeren Deckschale und einer darunter angeordneten Tragschale der Fronthaube eingesetzt sein. Diese Anordnung hat den Vorteil, dass die Fronthaube als Ganzes vormontiert und so in den Vorderbau integriert werden kann. Auf diese Weise können insbesondere alle kritischen Bereiche der Fronthaube, das sind vor allem die Bereiche, unter denen sich Aggregate des Fahrzeuges befinden, erfindungsgemäß versteift werden. Eine weitere Möglichkeit, die Verformungselemente einzusetzen, besteht darin, sie zwischen der Fronthaube und einem Längsträger des Vorderbaus des Kraftfahrzeuges anzuordnen. Damit sind sie ein Teil der Karosserie und werden zusammen mit dieser aufgebaut.

Ein besonders kritischer Bereich befindet sich im Übergang zu den Kotflügeln. Bei einer eingelegten Fronthaube überlappt diese einen Flansch am Rande des Kotflügels, der im Randbereich fest mit einem darunter verlaufenden Längsträger verbunden ist. Um hier bei einem Kopfaufprall den gewünschten Verzögerungsverlauf zu erreichen, wird vorgeschlagen, die Verbindung dieses Flansches mit dem Längsträger über einen der im Folgenden beschriebenen Verformungselemente zu bewerkstelligen.

Einen besonders klar definierten Verzögerungsverlauf mit einer deutlich ausgeprägten anfänglichen Verzögerungsspitze erhält man, wenn die Versagensstellen als Sollbruchstellen ausgebildet sind, wobei ein Verformungselement aus mindestens zwei gegeneinander versetzten Teilstücken besteht, die über eine die Sollbruchstelle aufweisende Brücke miteinander verbunden sind, und die Teilstücke auch nach einem Bruch der Versagensstelle ihre Ausrichtung in Bezug zur Belastungsrichtung im Wesentlichen beibehalten. Dabei wird die Sollbruchstelle so ausgelegt, dass sie bei einer exakt definierten Kraft bricht. Durch die Ausrichtung der Teilstücke versetzt zur Belastungsrichtung schieben diese nach dem Versagen der Sollbruchstelle aneinander vorbei und ordnen sich nebeneinander an, so dass ein erheblicher Deformationsweg freigegeben wird. Dieser Weg wird im Wesentlichen widerstandslos durchfahren, da nach dem Bruch der Sollbruchstellen die Struktur versagt. Durch die in der Struktur angelegten neuen Positionen der einzelnen Teilstücke kann es nicht zu Verhakungen oder dergleichen kommen. Der freigegebene Deformationsweg wird umso größer, je mehr Teilstücke über Sollbruchstellen miteinander verbunden sind. Vorzugsweise sind die einzelnen Teilstücke von einer Ebene zur anderen jeweils in eine Richtung gegeneinander versetzt, so dass ein mittleres Teilstück von den beiden anderen geführt wird. Die Sollbruchstellen zwischen den einzelnen Ebenen können nun so ausgeführt werden, dass sie entweder im Wesentlichen gleichzeitig oder aber nacheinander brechen, wodurch sich ein stufenartiger Auf- und Abbau der anfänglichen Verzögerungsspitze ergibt.

Eine andere Möglichkeit, die Teilstücke des Verformungselementes anzuordnen, besteht darin, diese unter einem Winkel zusammenlaufen zu lassen und in der Winkelspitze über eine eine Versagensstelle bildende Knickstelle miteinander zu verbinden.

Wenn das Verformungselement z. B. aus zwei Teilstücken besteht, klappen diese gegeneinander und legen sich flach aufeinander, was einen relativ großen Deformationsweg in Bezug auf die Höhe des Verformungselementes ergibt. Auch hier kann die Versagensstelle als Sollbruchstelle ausgebildet werden, was einen klar definierten Belastungswert ergibt, bei dem das Verformungselement nachgibt.

Auch bei dieser Lösung können mehrere Teilstücke über jeweils eine Knickstelle miteinander verbunden werden, so dass sich eine Art Ziehharmonika ergibt, und dieje nachdem wie die Sollbruchkraft an den einzelnen Knickstellen ausgelegt ist - bei einer Belastung gleichzeitig oder sukzessive brechen.

In der Regel wird man mehrere Verformungselemente nebeneinander anordnen, so dass unabhängig von der konkreten Aufschlagstelle des Kopfes jedenfalls ein Verformungselement unmittelbar wirksam ist. Insbesondere bei der Ausführung, bei der die einzelnen Teilstücke unter einem Winkel aneinander gesetzt sind, kann die Anordnung so erfolgen, dass die Knickstellen aneinander stoßen und ein die Versagensstelle bildendes Kreuz formen. Insgesamt ergibt sich dann ein wabenförmiger Aufbau, wobei die Verbindung der einzelnen Waben jeweils Versagensstellen bilden.

Bei den einzelnen Teilstücken handelt es sich vorzugsweise um Lamellen, die an einer Kante linienförmig miteinander verbunden sind, wobei die Verbindungslinie die Versagensstelle bildet. Auf diese Weise kann ein Verformungselement eine relativ große Breite überbrücken. Gleichzeitig kann durch die Länge der Verbindungsstelle auch die Kraft bestimmt werden, bei der die Versagensstelle brechen bzw. nachgeben soll. Außerdem lassen sich solche Verformungselemente relativ leicht durch Extrudieren herstellen.

Um ein undefiniertes Brechen der Lamellen selbst zu vermeiden, wird vorgeschlagen, dass sich die Lamellen zur Versagensstelle hin verdünnen.

Insbesondere bei der Ausführung, bei der die Lamellen aneinander vorbeigleiten, kann ein Verformungselement auch eine geschlossene, ringförmige Form aufweisen, so dass die Teilstücke teleskopartig ineinander schiebbar sind.

Die Form der Sollbruchstelle kann in mehreren Arten realisiert werden. Z. B. kann sie von einer dünnen Lippe gebildet werden, die bei einer Belastung reißt. Durch die Dicke bzw. Länge der Lippe kann die Risskraft relativ genau eingestellt werden, so dass sich ein klar definierter Verzögerungsverlauf ergibt.

Eine weitere Möglichkeit besteht darin, die Sollbruchstelle von einer Schneidkante zu bilden, die an einem Teilstück ausgebildet ist und die auf einem abscherbaren Lappen am anderen Teilstück aufgesetzt ist und gegebenenfalls über eine dünne Verbindung mit diesem verfügt. Bei einer Belastung schneidet die Schneidkante den Lappen ab. Auch hierzu sind definierte Kräfte notwendig, so dass sich die Sollbruchstelle konstruktiv gut einstellen lässt.

Im Folgenden soll anhand mehrere Ausführungsbeispiele, dargestellt in mehreren Figuren, die Erfindung näher erläutert werden. Dazu zeigen:
- Fig. 1: Verformungselemente mit mehrfach stufig abgesetzten lamellenartigen Teilstücken;
- Fig. 2: Verformungselemente in Form einer Stufenpyramide;
- Fig. 3: Verformungselemente mit einfach stufig abgesetzten lamellenartigen Teilstücken;
- Fig. 4: Verformungselemente aus zwei zu einem Kreis zusammengefügten bogenförmigen Teilstücken und Verformungselemente mit einen Winkel einschließenden lamellenartigen Teilstücken, die nicht unter den Wortlaut vom Anspruch 1 fallen;
- Fig. 5: Verformungselemente mit einer zerstörbaren Gashülle in einer verkleinerbaren Kammer, die nicht unter den Wortlaut vom Anspruch 1 fallen;
- Fig. 6: eine Anordnung von Verformungselementen zwischen einem Längsträger einer Fahrzeugkarosserie und dem Rand eines Kotflügels, über dem sich eine Fronthaube befindet;
- Fig. 7: eine mehr prinzipielle Darstellung der Ausführung nach Fig. 3;
- Fig. 7a bis Fig. 7c: verschiedene Ausführungen von Brücken zwischen den Teilstücken eines Verformungselementes nach Fig. 7;
- Fig. 8: eine mehr prinzipielle Darstellung der Ausführung nach Fig. 1;
- Fig. 8a bis Fig. 8c: verschiedene Ausführungen von Brücken zwischen den Teilstücken eines Verformungselementes nach Fig. 8;
- Fig. 9: eine kastenförmige Zusammensetzung von Verformungselementen die nicht unter den Wortlaut vom Anspruchs 1 fallen;
- Fig. 10: eine mauerartige Zusammensetzung von Verformungselementen die nicht unter den Wortlaut des Anspruchs 1 fallen;
- Fig. 10a: einen vergrößerten Ausschnitt aus Fig. 10;
- Fig. 11: eine Zusammensetzung von bogenförmigen Verformungselementen in eine Wabenform die nicht unter den Wortlaut des Anspruchs 1 fallen;
- Fig. 11a: eine erste Ausführung der Verbindung zwischen zwei benachbarten Waben nach Fig. 11;
- Fig. 11b: eine zweite Ausführung der Verbindung zwischen zwei benachbarten Waben nach Fig. 11;
- Fig. 12: eine weitere Art der Zusammensetzung von bogenförmigen Verformungselementen, die nicht unter den Wortlaut des Anspruchs 1 fallen, in eine Wabenform;
- Fig. 13: eine perspektivische Darstellung der Ausführung nach Fig. 12.

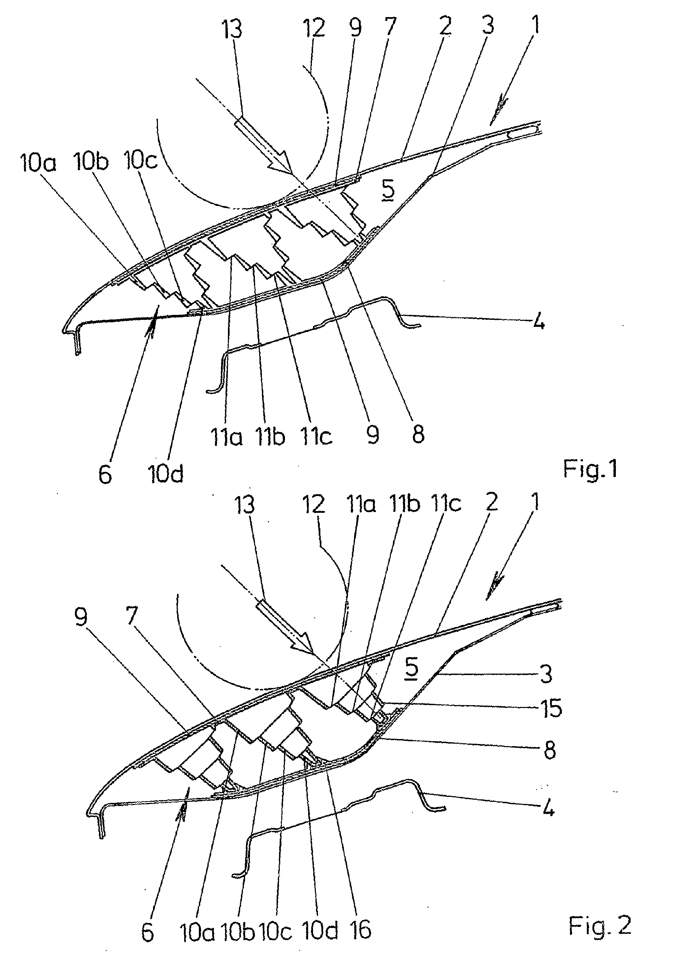

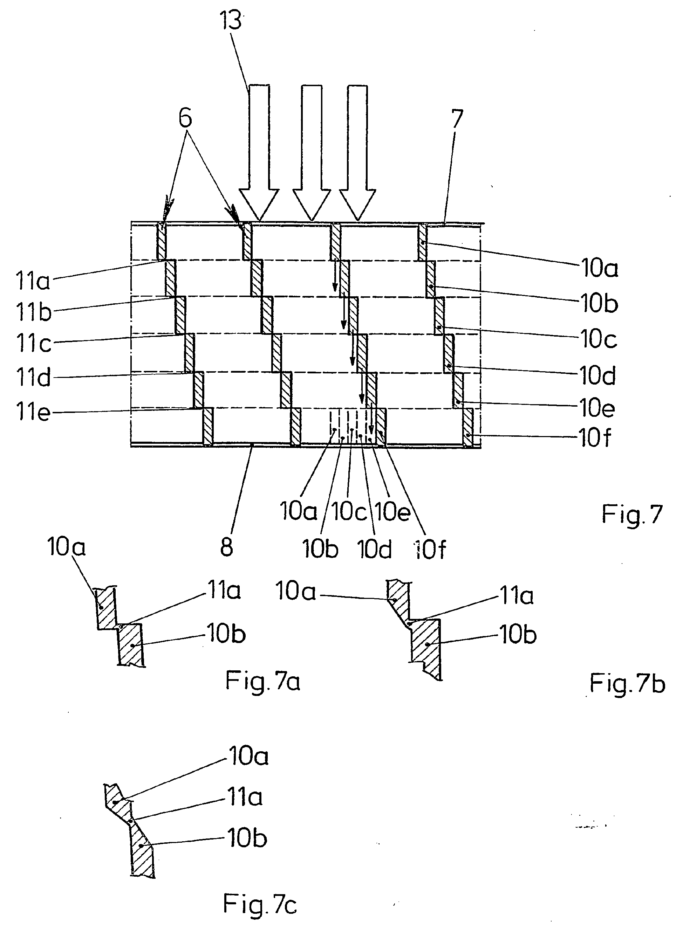

Die Figuren 1 bis 5 zeigen jeweils eine Fronthaube 1 mit einer Deckschale 2 im Bereich eines vorderen Querträgers 4. Zumindest abschnittsweise ist unterhalb der Deckschale 2 eine Tragschale 3 angeordnet. Die Deckschale 2 sowie die Tragschale 3 bilden einen Hohlraum 5, der im Schnitt in etwa linsenförmig ist. Innerhalb des Hohlraumes 5 befinden sich mehrere Verformungselemente 6, die an einer oberen und unteren Trageplatte 7, 8 befestigt sind bzw. einstückig mit dieser ausgeführt sind. Die Trageplatten 7, 8 liegen flächig an der Deckschale 2 bzw. Tragschale 3 an und sind mit ihr verklebt, was durch die gestrichelt angedeutete Klebeschicht 9 angedeutet sein soll. Jedes Verformungselement 6 besteht aus mehreren lamellenartigen Teilstücken 10a bis 10d, die über Brücken 11a bis 11c miteinander verbunden sind. Die einzelnen Teilstücke 10a bis 10d sind stufig gegeneinander versetzt, wodurch sie, wenn die Brücken 11a bis 11c brechen, widerstandslos aneinander vorbei gleiten können, was u. a. in Figur 7 noch einmal prinzipiell dargestellt ist.

Mit 12 ist eine Kugel bezeichnet, die einen aufschlagenden Kopf oder einen aufschlagenden Simulationskörper darstellt. Die Aufschlagrichtung ist durch den Pfeil 13 angedeutet. Man erkennt, dass die einzelnen Teilstücke senkrecht zur Aufschlagrichtung gegeneinander versetzt sind.

Bei einem Aufschlag wird sich einerseits die Deckschale 2 der Tragschale 3 nähern, andererseits wird die Fronthaube 1 insgesamt nach unten gedrückt, bis die Tragschale 3 auf dem Querträger 4 aufliegt. Sobald der Weg der Fronthaube insgesamt ausgeschöpft ist, drückt der aufschlagende Kopf 12 auf die Verformungselemente 6, so dass die Brücken 11a bis 11c belastet werden. Je nachdem mit welcher Widerstandskraft diese versehen sind, ergibt sich eine hohe anfängliche Kopfverzögerung, bis die Brücken 11a bis 11c brechen oder reißen bzw. abscheren. In diesem Moment ist das Verformungselement 6 wirkungslos, so dass die jetzt noch wirkenden Verzögerungen allein durch die Verbiegung der Deckschale 2 bzw. nach einem vollständigen Zusammendrücken des Hohlraumes 5 durch die der Tragschale 3 hervorgerufen wird. Dabei ergeben sich aber deutlich geringere Verzögerungen, so dass sich ein Verzögerungsverlauf einstellt, der durch einen hohen aber kurzen anfänglichen Verzögerungswert charakterisiert ist.

Figur 2 entspricht im Wesentlichen der Ausführung nach Figur 1. Allerdings bilden hier die Verformungselemente 6 Stufenpyramiden 15, so dass sich die einzelnen Ebenen der Teilstücke 10a bis 10d teleskopartig ineinander schieben, wenn eine äußere Belastung auftritt. Die einzelnen Stufenpyramiden 15 können mit ihrem Kopf in eine entsprechende Aufnahme 16 an der unteren Trageplatte 8 eingesetzt werden.

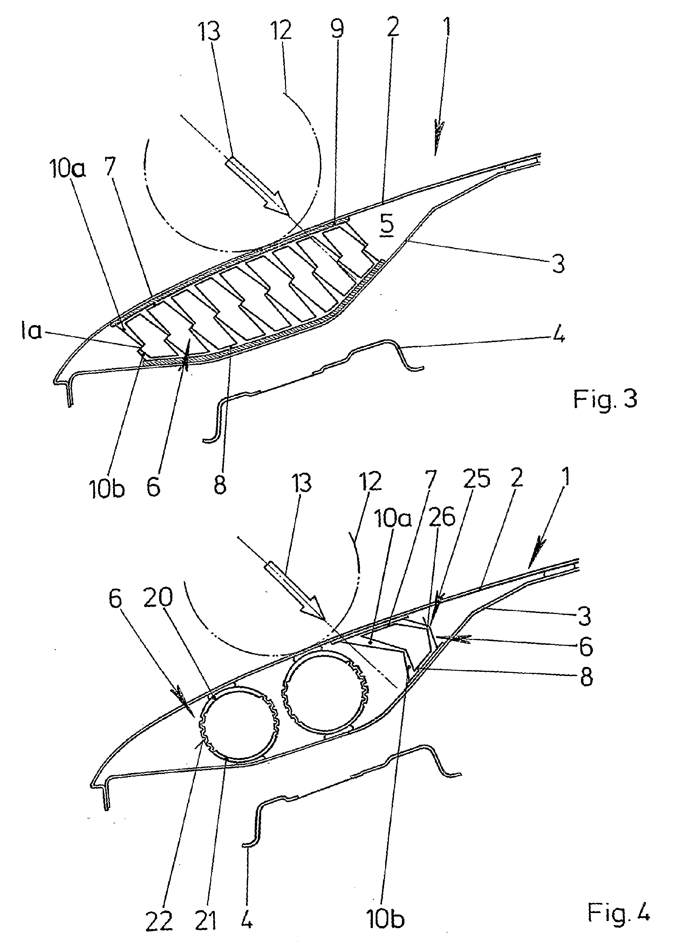

Figur 3 zeigt eine weitere Ausführungsform, wobei die einzelnen Verformungselemente 6 aus zwei lamellenartigen Teilstücken 10a, 10b bestehen und jeweils gleich gerichtet gestuft sind, während bei der Figur 1 die einzelnen Verformungselemente 6 abwechselnd gegengerichtet gestuft sind. Bei der in Figur 3 dargestellten Ausführungsform lässt sich damit eine etwas dichtere Ausstattung des Hohlraumes 5 mit den Verformungselementen 6 bewirken. Außerdem ist bei dieser Ausführungsform jedes Verformungselement 6 lediglich aus zwei Teilstücken 10a, 10b gebildet, die über jeweils eine Brücke 11a miteinander verbunden sind. Der maximale Deformationsweg beträgt daher nur die halbe Höhe der Verformungselemente 6 im ungebrochenen Zustand. Die beiden Trageplatten 7, 8 können sich nur auf ein Blockmaß nähern, das durch die Höhe eines der Teilstücke 10a, 10b bestimmt ist. In vielen Fällen reicht dies aber aus.

Die Figur 4 zeigt zwei weitere Verformungselemente 6. Gemäß der links dargestellten Ausführung besteht ein Verformungselement 6 aus zwei Bögen 20, 21, die zu einem Kreis zusammengesetzt sind, wobei der jeweilige Bogenzenit mit der Deckschale 2 bzw. mit der Tragschale 3 verbunden ist. Die Bögen 20, 21 sind an ihren Enden in Versagensstellen miteinander verbunden, wobei die Verbindungen durch im Schnitt halbkreisförmige Einkerbung 22 sowohl an der Außen- als auch an der Innenseite versehen sind.

Ein weiteres Verformungselement ist rechts im Bild dargestellt. Die beiden Teilstücke 10a, 10b sind schräg zueinander angeordnet und laufen unter einem Winkel von etwas mehr als 90° in eine Knickstelle 25 zusammen. Diese Knickstelle 25 ist als Versagensstelle ausgebildet, d.h. sie ist verdünnt ausgeführt und mit einer Einkerbung 26 versehen. Bei einer stoßartigen Belastung wirkt die Knickstelle 25 zunächst als Scharnier, so dass sich die beiden Teilstück 10a, 10b einander nähern und der eingeschlossene Winkel kleiner wird. Dabei wird die Knickstelle 25 belastet, bis sie bricht. Danach wird die Verzögerung im Wesentlichen davon bestimmt, wie stark die Verbindung des Fußes des Teilstückes 10a, 10b mit der jeweiligen Trageplatte 7, 8 ist.

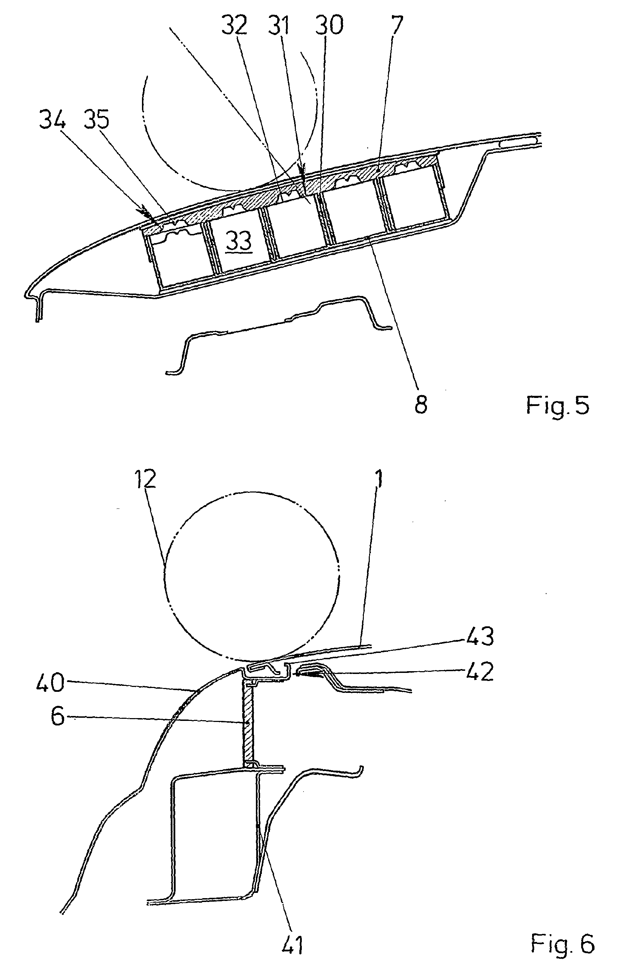

Figur 5 zeigt Verformungselemente 6, die quasi pneumatisch arbeiten. Jede Trageplatte 7, 8 ist mit Wänden 30 versehen, die zum Teil ineinander steckbar sind, so dass sich geschlossene Kammern 31 ergeben. In diesen Kammern 31 sind jeweils in einer Hülle 32 Luft- bzw. Gaspolster 33 angelegt.

Die obere Trageplatte 7 hat jeweils eine Vertiefung 34, in der sich ein Dorn 35 befindet. Die Hülle 32 ist prall mit Luft oder Gas gefüllt, so dass sie nur mit einem erheblichen Kraftaufwand gegen den in der Hülle 32 wirkenden Druck zusammengedrückt werden kann.

Wird auf die Deckschale 2 und damit auf die obere Trageplatte 7 eine stoßartige Kraft ausgeübt, so werden die Kammern 31 verkleinert, wodurch die Hülle 32 mit dem Gas in die Vertiefung 34 hineingedrückt wird. Ab einer bestimmten Kraft drückt der Dorn 35 in die Hülle 32, so dass diese platzt und nun keinen Widerstand mehr aufbringen kann. Die beiden Trageplatten 7, 8 bzw. die Deckschale 2 bzw. Tragschale 3 können kraftlos aufeinander zu bewegt werden.

Die Figur 6 zeigt eine etwas andere Anordnung für ein Verformungselement 6. Die Figur zeigt dazu einen Querschnitt durch einen Kotflügel 40 eines Kraftfahrzeuges mit einer angrenzenden Fronthaube 1. Unterhalb des Kotflügels 40 befindet sich ein Längsträger 41 der Fahrzeugkarosserie. Der Kotflügel 40 weist einen nach unten abgesetzten Flansch 42 auf, über den der Rand der Fronthaube 1 verläuft. Ein oder mehrere Verformungselemente 6 befinden sich zwischen dem abgesetzten Flansch 42 und dem Längsträger 41.

Wenn ein Kopf, symbolisch dargestellt durch die Kugel 12, im Übergangsbereich zwischen der Fronthaube 1 und dem Kotflügel 40 aufschlägt, so verhakt zunächst der Rand der Fronthaube 1 mit dem nach oben abgestellten Rand des Flansches 42. Dem Aufschlag setzen die Verformungselemente 6 zunächst - wie oben schon erläutert - einen Widerstand entgegen, so dass die Kopfverzögerung stark ansteigt. Wenn eine bestimmte Aufschlagskraft erreicht ist, brechen die Verformungselemente 6 und die Fronthaube 1 nähert sich dem Längsträger 41. Die nach dem Nachgeben der Verformungselemente 6 ausgeübte Kraft ergibt sich im Wesentlichen aus der verhakten Struktur von Kotflügel 40 und Fronthaube 1. Sollte es zu einem zweiten, indirekten Aufschlag des Kopfes mit dem Längsträger 41 kommen, ist die Geschwindigkeit des Kopfes schon weitgehend abgebaut, so dass ebenfalls keine hohen Verzögerungen und damit keine schweren Verletzungen zu erwarten sind.

Die folgenden Figuren zeigen noch einmal an einigen Beispielen den prinzipiellen Aufbau von Verformungselementen 6 und ihre Zusammenfügung zu einer Verformungsstruktur.

Die Figur 7 zeigt mehrere Verformungselemente 6, die jeweils aus mehreren Teilstück 10a - 10f zusammengesetzt sind, die jeweils gegeneinander versetzt sind. Bei einem Kopfaufprall auf die obere Trageplatte 7 brechen die Brücken 11a bis 11f zwischen den Teilstücken ₁0a bis 10f und diese werden nebeneinander geschoben, so dass sich die Situation ergibt, wie sie im mittleren Teil des Bildes gestrichelt dargestellt ist. Die sich ergebende Blockhöhe wird von der Höhe eines einzelnen Teilstückes bestimmt. Entsprechend der Anzahl der Teilstücke 10a - 10f ergibt sich ein Deformationsweg aus der Höhe eines Verformungselementes 6 abzüglich der Höhe eines Teilstückes.

In den Figuren 7a, 7b und 7c sind einige der Sollbruchstellen dargestellt. Wie in Figur 7a gezeigt, besteht eine Sollbruchstelle aus einer Brücke 11a, die die zugewandten Enden von zwei untereinander angeordneten Teilstücken 10a, 10b verbindet. Eine solche Brücke 11a kann, wie in Fig. 7a gezeigt, relativ kurz ausgeführt werden. Wie in den Figuren 7b und 7c gezeigt, kann außerdem ein oder beide Enden der Teilstücke 10a, 10b angeschrägt sein, so dass sich ein fließender Übergang in die Brücke 11a ergibt.

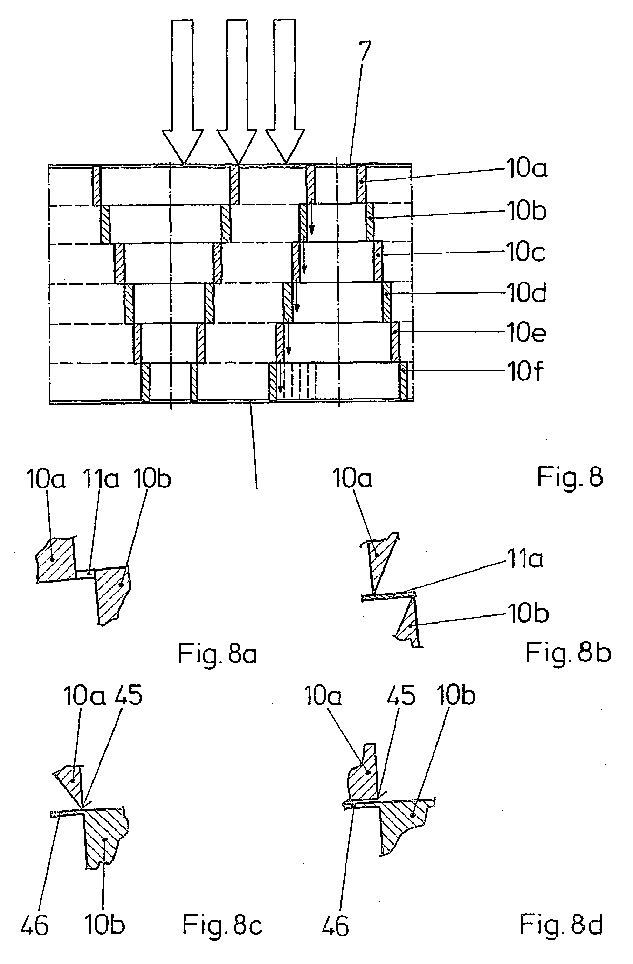

Figur 8 zeigt eine prinzipielle Darstellung einer Lösung nach Figur 1 bzw. 2. Die einzelnen Teilstücke 10a - 10f sind gegeneinander abgesetzt, so dass sie ineinander verschiebbar sind und nach Bruch der sie verbindenden Brücken 11a -11e die für ein Verbindungselement 6 gestrichelt dargestellte Position einnehmen. Auch hier ergibt sich die Blockhöhe aus der Höhe eines Teilstückes 10a - 10f. In den Figuren 8a, 8b, 8c sind einige mögliche Sollbruchstellen dargestellt. Figur 8a entspricht der Lösung nach Figur 7a mit einer etwas breiteren Brücke 11a. Figur 8b zeigt eine Brücke 11a in Form einer Lippe, die zwei spitz zulaufende Teilstücke 10a, 10b verbindet. Die Figuren 8c und 8d zeigen eine Schneidkante 45 an einem Teilstück 10a, die an einem Lappen 46 am folgenden Teilstück 10b anliegt. Die Schneidkante 45 kann entweder spitz (wie in Fig. 8c dargestellt) oder kantig (wie in Fig. 8d dargestellt) zulaufend ausgebildet sein. Wird auf das obere Teilstück 10a eine Stoßkraft ausgeübt, so wird der Lappen 46 durch die Schneidkante 45 vom Teilstück 10b abgetrennt, sobald eine genügend große Kraft vorliegt.

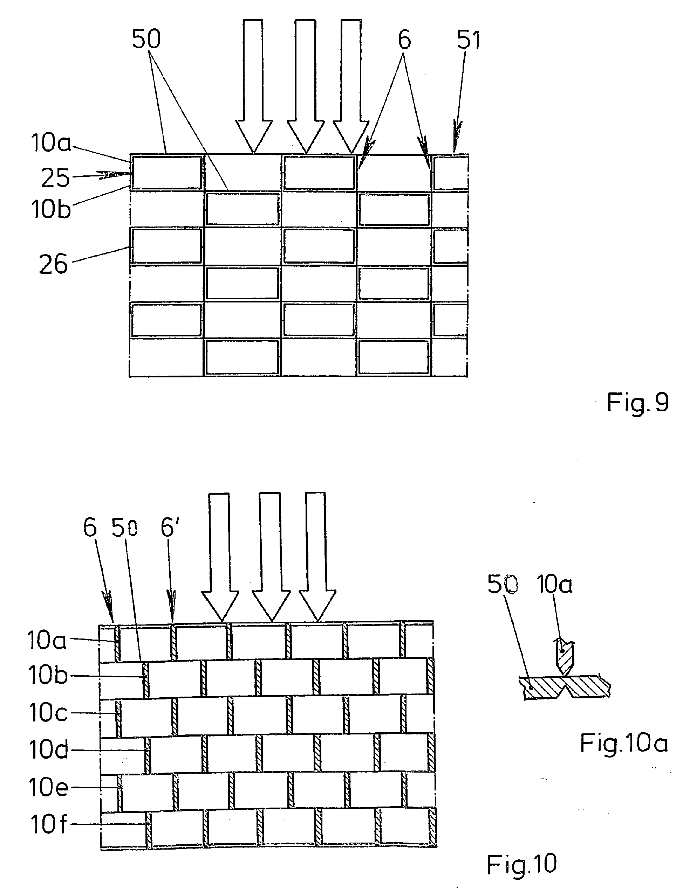

Figur 9 zeigt eine kastenartige Zusammensetzung der verschiedenen Verformungselemente 6, die über waagerecht zu den Verformungselementen verlaufende Verbindungsstege 50 miteinander verbunden sind. Jede senkrechte Wand eines Kastens 51 bildet somit ein Verformungselement 6, das über eine Knickstelle 25 gemäß Figur 4, rechtes Teilbild, verfügt. Jede Wand eines Kastens 51 ist demnach mittels einer Kerbe in zwei Teilstücke 10a, 10b geteilt, wobei die beiden Teilstücke 10a, 10b - wie dargestellt - auch unter einem Winkel von 180° verlaufen können.

Figur 10 zeigt eine Anordnung, bei der die einzelnen Verformungselemente 6 zu einer Wabe zusammengefügt sind, wobei jedes Teilstück 10a - 10f eines Verformungselementes 6 zu beiden Seiten hin über einen durchgehenden Verbindungssteg 50 mit dem auf derselben Höhe liegenden Teilstück eines benachbarten Verformungselementes 6' verbunden ist, so dass sich, wie die Darstellung zeigt, eine Art Mauerwerk ergibt. Der Bruch und damit das Versagen der Struktur erfolgt an den Übergängen der Teilstücke zum jeweiligen Verbindungssteg 50. Dazu laufen die Teilstücke 10a - 10f spitz zu und stützen sich auf den unter den Teilstücken 10a -10f eingekerbten Verbindungssteg 50 ab, wie dies in Fig. 10a vergrößert dargestellt ist.

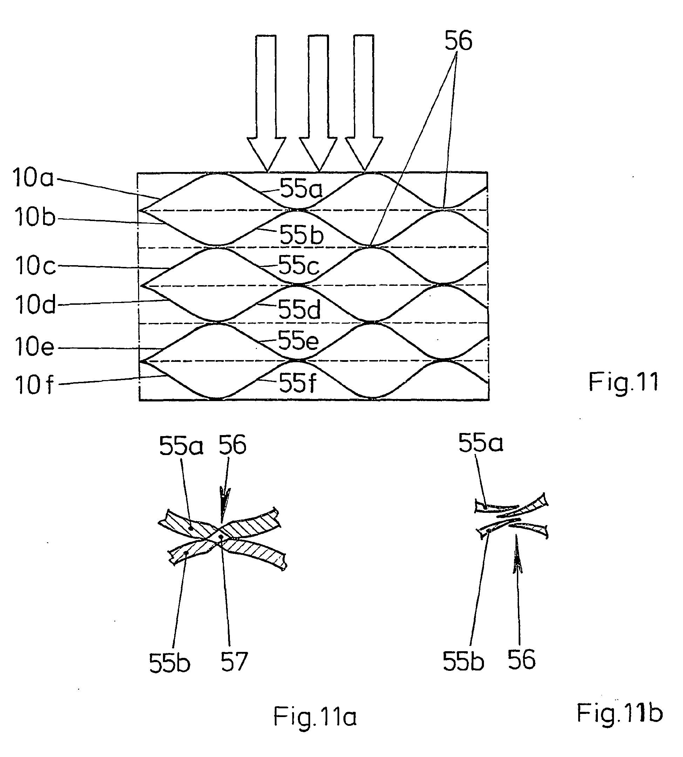

Figur 11 zeigt eine Anordnung, bei der die Teilstücke 10a - 10f bogenförmig verlaufen, und zwar so, dass eine konvexe Seite eines Teilstückes einer konkaven des folgenden Teilstückes gegenüberliegt. Die Enden der Teilstücke 10a - 10f münden jeweils in einen Gegenbogen 55a - 55f, der in der entsprechenden Gegenbogen eines auf derselben Höhe liegenden Nachbarteilstückes übergeht. Es bilden sich somit Knoten 56 mit vier Zugängen. Diese Knoten 56 werden als Versagensstellen ausgebildet. Dazu sind sie entweder durch eine Öffnung 57 geschwächt (siehe Fig. 11a) oder durch einen Haftreibschluss (siehe Fig. 11b) zusammengehalten, wobei die Enden der einzelnen Teilstücke 10a - 10f zusätzlich leicht zusammengeklebt sind. Durch die bogenartige Struktur werden bei einem Kopfaufschlag die einzelnen Knoten 56 belastet. Bei einer bestimmten Größe der Belastung brechen die Knoten 56 auf, so dass die Struktur versagt. Bei einer Reibschlussverbindung in den Knoten 56 verbleibt nach dem Versagen noch ein Gleitreibschluss, der die Kopfverzögerung nach der anfänglichen Verzögerungsspitze bestimmt.

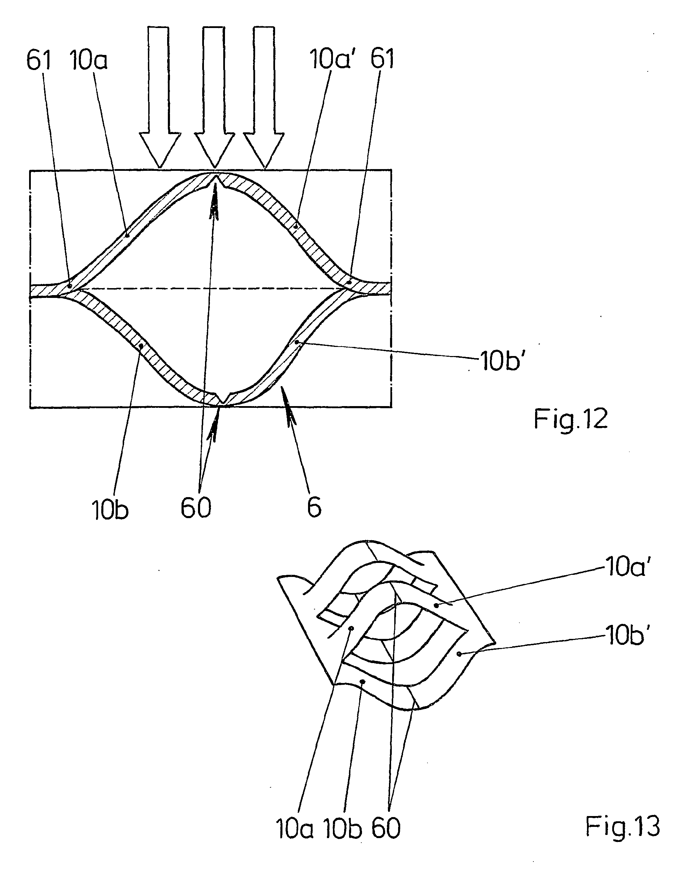

Die Anordnung nach Fig. 12 unterscheidet sich insofern von der nach Fig. 11, als dabei Versagensstellen in Form von Sollbruchstellen 60 im Zenit der Bögen, die von den Teilstücken 10a, 10a' bzw. 10b, 10b' geformt sind, vorhanden sind. Die Verbindung der Bögen untereinander ist knickbar ausgeführt, so dass die Teilstücke 10a, 10b bzw. 10a', 10b' beim Brechen der Sollbruchstelle 60 gegeneinander klappen. Weiterhin sind die Bögen eines Kreises versetzt zueinander angeordnet, was in der Fig. 13 in perspektivischer Sicht dargestellt ist. Beim Versagen des Verformungselementes 6 legen sich die die Bögen bildenden Teilstücke 10a, 10a' bzw. 10b, 10b' nicht auf- sondern nebeneinander, was eine sehr geringe Blockhöhe ergibt, so dass der freigegebene Deformationsweg besonders groß ist.

### Bezugszeichenliste

- 1: Fronthaube
- 2: Deckschale
- 3: Tragschale
- 4: Querträger
- 5: Hohlraum

- 6: Verformungselement
- 7: Trageplatte
- 8: Trageplatte
- 9: Klebeschicht
- 10a bis 10f: Teilstücke

- 11a bis 11e: Brücken
- 12: Kugel
- 13: Pfeil
- 14: Aufnahme
- 15: Stufenpyramide

- 16: Aufnahme
- 20: Bogen

- 21: Bogen
- 22: Einkerbung
- 25: Knickstelle

- 26: Einkerbung

- 30: Wand
- 31: Kammer
- 32: Hülle
- 33: Luft-/Gaspolster
- 34: Vertiefung
- 35: Dorn

- 40: Kotflügel
- 41: Längsträger
- 42: Flansch

- 45: Schneidkante
- 46: Lappen

- 50: Verbindungssteg

- 51: Kasten

- 55: Gegenbogen

- 56: Knoten
- 57: Öffnung
- 60: Sollbruchstelle

- 61: Knickstelle

## Patentansprüche

1. Vorderbau eines Kraftfahrzeuges mit einer bei einem Kopfaufprall sich nachgiebig verhaltenen Fronthaube (1) und mit Verformungselementen (6), die einer statischen Belastung einen Widerstand entgegensetzen, so dass bei einer solchen Belastung eine irreversible Eindrückung der Fronthaube (1) verhindert wird, und die bei einer bestimmten Belastung innerhalb einer stoßartigen Krafteinwirkung nachgeben, **dadurch gekennzeichnet, dass** die Verformungselemente (6) aus zwei oder mehreren Teilstücken (10a bis 10f) bestehen, die jeweils über eine Versagensstelle miteinander verbunden sind, die oberhalb einer bestimmten Belastung ruckartig bricht und **dadurch** einen Deformationsweg freigibt, wobei die Teilstücke (10a bis 10f) so gehalten oder geführt sind, dass sie nach dem Nachgeben der Versagensstelle auf Grund der stoßartigen Krafteinwirkung den Deformationsweg kraftlos durchlaufen und eine definierte neue Position einnehmen.

2. Vorderbau nach Anspruch 1, **dadurch gekennzeichnet, dass** dieser eine äußere Deckschale (2) und eine darunter angeordnete Tragschale (3) aufweist und zwischen den Schalen (2, 3) die Verformungselemente (6) zur Versteifung der Fronthaube (1) angeordnet sind.

3. Vorderbau nach Anspruch 1, **dadurch gekennzeichnet, dass** die Verformungselemente (6) zwischen der Fronthaube (1) und einem Längsträger (41) des Vorderbaus des Kraftfahrzeuges angeordnet sind.

4. Vorderbau nach Anspruch 3, **dadurch gekennzeichnet, dass** dieser zwei nach innen gebogene Kotflügel (40) aufweist, zwischen denen sich die Fronthaube (1) erstreckt, wobei die inneren, der Fronthaube (1) zugewandten Ränder der Kotflügel (40) jeweils einen nach unten abgesetzten Flansch (42) aufweisen, auf dem der zugehörige Rand der Fronthaube (1) liegt, und dass zwischen dem nach unten abgesetzten Flansch (42) und dem Längsträger (41) ein Verformungselement (6) angeordnet ist.

5. Vorderbau einem der vorhergehenden Ansprüche, **dadurch gekennzeichnet, dass** die Versagensstellen als Sollbruchstellen ausgebildet sind und dass ein Verformungselement (6) aus mindestens zwei gegeneinander versetzten Teilstücken (10a bis 10f) besteht, die über eine die Sollbruchstelle aufweisende Brücke (11a bis 11e) miteinander verbunden sind, wobei die Teilstücke (10a bis 10f) auch nach einem Bruch der Versagensstelle ihre Ausrichtung in Bezug zur Belastungsrichtung im Wesentlichen beibehalten.

6. Vorderbau nach Anspruch 5, **dadurch gekennzeichnet, dass** ein Verformungselement (6) aus mehr als drei gegeneinander versetzten Teilstücken (10a bis 10f) besteht, die über jeweils eine eine Sollbruchstelle aufweisende Brücke (11a bis 11e) miteinander verbunden sind, wobei die Teilstücke (10a bis 10f) so zueinander angeordnet sind, dass ein mittleres Teilstück von den anderen nach dem Bruch der Sollbruchstellen geführt wird.

7. Vorderbau nach einem der vorhergehenden Ansprüche, **dadurch gekennzeichnet, dass** die Teilstücke (10a bis 10f) Lamellen sind und die Versagensstelle auf einer Linie parallel zur seitlichen Ausdehnung der Lamelle verlaufen.

8. Vorderbau nach Anspruch 7, **dadurch gekennzeichnet, dass** sich die Lamellen zur Versagensstelle hin verdünnen.

9. Vorderbau nach einem der Ansprüche 5 oder 6, **dadurch gekennzeichnet**, das Verformungselement (6) eine geschlossene, ringförmige Form aufweist, so dass die Teilstücke (10a bis 10f) teleskopartig ineinander schiebbar sind.

10. Vorderbau nach Anspruch 5, **dadurch gekennzeichnet, dass** die Sollbruchstelle von einer dünnen Lippe gebildet ist, die bei einer Belastung reißt.

11. Vorderbau nach Anspruch 5, **dadurch gekennzeichnet, dass** die Sollbruchstelle von einer Schneidkante (45) an dem einen Teilstück (10a bis 10f) und einem abscherbaren Lappen (46) an dem anderen Teilstück gebildet ist.

## Claims

1. Front structure of a motor vehicle comprising a front bonnet (1), which behaves in a yielding manner in the event of a head impact, and comprising deformation elements (6), which resist a static loading so that in the event of such loading an irreversible denting of the front bonnet (1) is prevented and which give way in the event of a specific loading within an impact-like action of force, **characterized in that** the deformation elements (6) comprise two or more portions (10a to 10f), which are connected to one another in each case by a failure point, which above a specific loading abruptly breaks and hence allows a deformation path, wherein the portions (10a to 10f) are held or guided in such a way that, after the failure point gives way, because of the impact-like action of force they travel the deformation path in a force-free manner and take up a defined new position.

2. Front structure according to claim 1, **characterized in that** it comprises an outer top shell (2) and a supporting shell (3) disposed under the top shell, and between the shells (2, 3) the deformation elements (6) for reinforcing the front bonnet (1) are disposed.

3. Front structure according to claim 1, **characterized in that** the deformation elements (6) are disposed between the front bonnet (1) and a longitudinal member (41) of the front structure of the motor vehicle.

4. Front structure according to claim 3, **characterized in that** it comprises two inwardly curved wings (40), between which the front bonnet (1) extends, wherein the inner edges of the wings (40) facing the front bonnet (1) each have a downwardly offset flange (42), on which the associated edge of the front bonnet (1) rests, and that a deformation element (6) is disposed between the downwardly offset flange (42) and the longitudinal member (41).

5. Front structure according to one of the preceding claims, **characterized in that** the failure points are configured as predetermined breaking points and that a deformation element (6) comprises at least two mutually offset portions (10a to 10f), which are connected to one another by a bridge (11a to 11e) comprising the predetermined breaking point, wherein the portions (10a to 10f) even after fracture of the failure point substantially retain their alignment in relation to the loading direction.

6. Front structure according to claim 5, **characterized in that** a deformation element (6) comprises more than three mutually offset portions (10a to 10f), which are connected to one another in each case by a bridge (11a to 11e) comprising a predetermined breaking point, wherein the portions (10a to 10f) are disposed in such a way relative to one another that, after the predetermined breaking points break, a middle portion is guided by the other portions.

7. Front structure according to one of the preceding claims, ***characterized in* that** the portions (10a to 10f) are lamellae and the failure points extend along a line parallel to the lateral extent of the lamella.

8. Front structure according to claim 7, **characterized in that** the lamellae become thinner in the direction of the failure point.

9. Front structure according to one of claims 5 or 6, **characterized in that** the deformation element (6) has a closed, annular shape so that the portions (10a to 10f) are slidable telescopically one into the other.

10. Front structure according to claim 5, **characterized in that** the predetermined breaking point is formed by a thin lip that tears in the event of loading.

11. Front structure according to claim 5, **characterized in that** the predetermined breaking point is formed by a cutting edge (45) on the one portion (10a to 10f) and a shear-off flap (46) on the other portion.

## Revendications

1. Structure avant d'automobile comprenant un capot frontal (1) qui se déforme en cas de collision de tête et des éléments de déformation (6), qui opposent une résistance à une sollicitation statique, de telle sorte qu'en cas d'une telle sollicitation, un enfoncement irréversible du capot (1) est évité, et qui se déforment, lors d'une certaine sollicitation située sous l'effet d'une force à la manière d'un choc, **caractérisée en ce que** les éléments de déformation (6) se composent de deux ou de plusieurs parties (10a à 10f), qui sont reliées respectivement les unes aux autres par un point de défaillance, qui se brise brusquement au-dessus d'une certaine sollicitation et qui libère ainsi un parcours de déformation, les parties (10a à 10f) étant maintenues ou guidées de façon à ce qu'elles parcourent de manière exempte de force, après la déformation du point de défaillance à la suite de l'exercice d'une force à la manière d'un choc, le parcours de déformation et prennent une nouvelle position définie.

2. Structure avant selon la revendication 1, **caractérisée en ce que** celle-ci présente une coque de couverture extérieure (2) et une coque porteuse (3) disposée dessous et qu'entre les coques (2, 3) sont disposés les éléments de déformation (6) pour rendre rigide le capot (1).

3. Structure avant selon la revendication 1, **caractérisée en ce que** les éléments de déformation (6) sont disposés entre le capot (1) et une poutre longitudinale (41) de la structure avant du véhicule.

4. Structure avant selon la revendication 3, **caractérisée en ce que** celle-ci présente deux ailes (40) courbées vers l'intérieur, entre lesquelles s'étend le capot (1), les bords de l'aile (40) tournés vers le capot présentant respectivement une bride (42) décalée vers le bas, sur laquelle repose le bord correspondant du capot (1), et **en ce qu'**un élément de déformation (6) est disposé entre la bride (42) décalée vers le bas et la poutre longitudinale (41).

5. Structure avant selon l'une quelconque des revendications précédentes, **caractérisée en ce que** les points de rupture sont conçus comme des points de rupture prescrite et **en ce qu'**un élément de déformation (6) se compose au moins de deux parties (10a à 10f) décalées les unes par rapport aux autres, qui sont reliées les unes aux autres par l'intermédiaire d'un pont présentant le point de rupture prescrite (11a à 11e), les parties (10a à 10f) maintenant essentiellement, même après une rupture du point de défaillance, leur orientation par rapport à l'orientation de la sollicitation.

6. Structure avant selon la revendication 5, **caractérisée en ce qu'**un élément de déformation (6) se compose de plus de trois parties (10a à 10f) décalées les unes par rapport aux autres, qui sont reliées les unes aux autres par respectivement un pont présentant un point de rupture prescrite (11a à 11e), les parties (10a à 10f) étant disposées les unes par rapport aux autres de façon à ce qu'une partie centrale soit guidée par les autres après la rupture des points de rupture prescrite.

7. Structure avant selon l'une quelconque des revendications précédentes, **caractérisée en ce que** les parties (10a à 10f) sont des lamelles et **en ce que** les points de défaillance s'étendent sur une ligne parallèlement à l'extension latérale de la lamelle.

8. Structure avant selon la revendication 7, **caractérisée en ce que** les lamelles s'amincissent vers le point de défaillance.

9. Structure avant selon l'une quelconque des revendications 5 ou 6, **caractérisée en ce que** l'élément de déformation (6) présente une forme fermée, circulaire, de telle sorte que les parties (10a à 10f) peuvent coulisser les unes dans les autres à la manière d'un télescope.

10. Structure avant selon la revendication 5, **caractérisée en ce que** le point de rupture prescrite est conçu par une mince lèvre, qui se déchire en cas de sollicitation.

11. Structure avant selon la revendication 5, **caractérisée en ce que** le point de rupture prescrite est formé par une arête de coupe (45) sur une partie (10a à 10f) et un lobe sectionnable (46) sur l'autre partie.
